# EUROPÄISCHE PATENTANMELDUNG

(11) **EP 1 167 304 A1**
(43) Veröffentlichungstag der Anmeldung: **02.01.2002**
(21) Anmeldenummer: 01114967.1
(22) Anmeldetag: 20.06.2001
(51) Int. Cl.: C02F 3/20

(54) **Vorrichtung zur lösbaren Befestigung von Belüftungseinrichtungen bei Anlagen zum Belüften von Wasser**

(30) Priorität: 23.06.2000 DE 10029689
(71) Anmelder: GUMMI-JÄGER KG GMBH & CIE, D-30625 Hannover (DE)
(72) Erfinder: Edel, Volker, Dr., 30916 Isernhagen (DE); Bruss, Franz-Ferdinand, 30900 Wedemark (DE)
(74) Vertreter: Depmeyer, Jochen

(57) **Zusammenfassung**

Die Erfindung betrifft eine Vorrichtung der obigen Art, wobei die Befestigungselemente für die Belüftungseinrichtung die Luftzuführungsleitung umschliessen. Um die Befestigung sicherer zu machen und Toleranzen ausgleichen zu können, werden erfindungsgemäss die Befestigungselemente von zwei einendig an der Belüftungseinrichtung bzw. deren Halterung verankerten, am freien Ende miteinander verhakten, biegsamen Riegeln gebildet, die durch eine nach Verhaken der Riegel angebrachte konische Einlage zwischen Riegel und Luftzuführungsleitung unter Spannung ( Zugspannung ) gehalten sind.

## Beschreibung

Die Erfindung betrifft eine Vorrichtung zur lösbaren Befestigung von Belüftungseinrichtungen an Luftzuführungsleitungen bei Anlagen zum feinblasigen Belüften von Wasser, wobei die Befestigungselemente die Luftzuführungsleitungen umschliessen.

Es sind Vorrichtungen dieser Art bekannt, bei denen die Befestigungseinrichtungen von zwei Halbschalen bzw. einer geteilten Schelle gebildet werden. Da die Schelle bzw. die Halbschalen steif ausgeführt sind, müssen sie genau auf die Aussenkonturen bzw. den Durchmesser der Luftzuführungsleitung abgestimmt sein. Toleranzen können dabei nicht ausgeglichen werden.

Der Erfindung liegt die Aufgabe zugrunde, Vorrichtungen der eingangs erwähnten Art so zu verbessern, dass Toleranzen ausgeglichen werden können. Zugleich strebt die Erfindung eine besonders sichere Befestigung an, um so z.B. meterlange Belüftungsrohre befestigen zu können..

Zur Lösung dieser Aufgabe werden erfindungsgemäss die Befestigungselemente von zwei einendig an der Belüftungseinrichtung bzw. deren Halterung verankerte, am freien Ende miteinander verhakte biegsame Riegeln gebildet, die durch eine nach Verhaken der Riegel angebrachte konische Einlage zwischen Riegel und Luftzuführungsleitung unter Spannung gahalten sind. Dabei kann jedem Riegel eine Einlage ( Zwischenlage ) zugeordnet werden, jedoch wird man vorzugsweise lediglich eine Einlage im Bereich der Verhakungsstelle zwischen den Riegelenden vorsehen.

Demgemäss wird aufgrund der Erfindung zunächst die Riegelbefestigung vorgenommen, und erst dann wird die konische Einlage zweckmässigerweise durch Eintreiben angebracht, um so etwaige Massungenauigkeit ausgleichen und die für die sichere Befestigung notwendige Riegelverspannung erzielen zu können.

Vorzugsweise werden die beiden Riegel einerseits und die Halterung für die Belüftungseinrichtung andererseits einstückig als Kunststofformkörper unter Verwendung eines zähharten Kunststoffes z.B. auf der Basis von Polypropylen (PP) gefertigt.

Die Ausbildung der Belüftungseinnrichtung kann an sich beliebig sein. Vorzugsweise werden jedoch platten- bzw. tellerförmige Belüfter und ferner rohrartige, mit geschlitzten Mänteln versehene Einrichtungen benutzt, die aufgrund der Erfindung mehrere Meter lang sein können.

Weitere Einzelheiten der Erfindung werden anhand der Zeichnung erläutert, in der ein Ausführungsbeispiel der Erfindung dargestellt ist. Es zeigen :
Fig. 1 eine Vorrichtung zur lösbaren Befestigung einer rohrförmigen Belüftungseinrichtung an einer Luftzuführungsleitung im senkrechten Schnitt durch die Luftzuführungsleitung,
Fig. 2 die Vorrichtung gemäss Fig. 1 in der Seitenansicht bzw. in Richtung des Pfeiles II gesehen und
Fig. 3 einen Teilschnitt durch die Vorrichtung gemäss Fig. 1 entlang der Linie III - III.

Die nachstehend beschriebene Vorrichtung ist Einzelteil einer im Wasser befindlichen Anlage zum feinblasigen Belüften von Gewässern und Wasserbecken.

Die geringfügig vorgespannte Luft wird über ein Rohr 1 (Luftzuführungsleitung) zugeführt, von dem aus die einzelnen, meist in Vielzahl vorgesehenen Belüftungseinrichtungen z.B. in Form eines Belüftungsrohres 2 unmittelbar oder mittelbar über ein weiteres Rohr beschickt werden.

Eine etwa rohrförmige Halterung 4 zur Aufnahme des Belüftungsrohres 2 ragt mit einem nach oben gerichteten Stutzen 5 in ein Loch des Rohres 1 hinein. Zur Abdichtung dienen dienen nicht wiedergegebene Dichtungen, die in einer Nut 7 der Halterung 4 angeordnet werden, zudem kann im Stutzenbereich noch eine Dichtungsmuffe benutzt werden.

Vom Rohr 1 aus gelangt die Luft über den Stutzen 5 über an sich bekannte Ausbildungen zwischen die Aussenfläche des Belüftungsrohres 2 und einem feingeschlitzten Gummirohr 7. Unter dem Überdruck öffnen sich die Schlitze des Gummirohres 7; die Luft entweicht dann in feinen Bläschen in das Wasser. Das Belüftungsrohr 2 überragt die Halterung 4 an beiden Seiten und verläuft im rechten Winkel zum Rohr 1, jedoch sind auch einseitige Anordnungen des Belüftungsrohres 2 möglich.

Um die Halterung 4 ausreichend sicher am Rohr 1 befestigen zu können, ist an jeder Seite der Halterung 4 ein vergleichsweise dünnwandiger Riegel 8 befestigt, der einstückig in den Körper der Halterung 4 übergeht und aufgrund seiner geringen Wandstärke verbiegbar ist.

Halterung 4 und die Riegel 8 sind ein Kunststofformkörper aus hart eingestelltem PP.

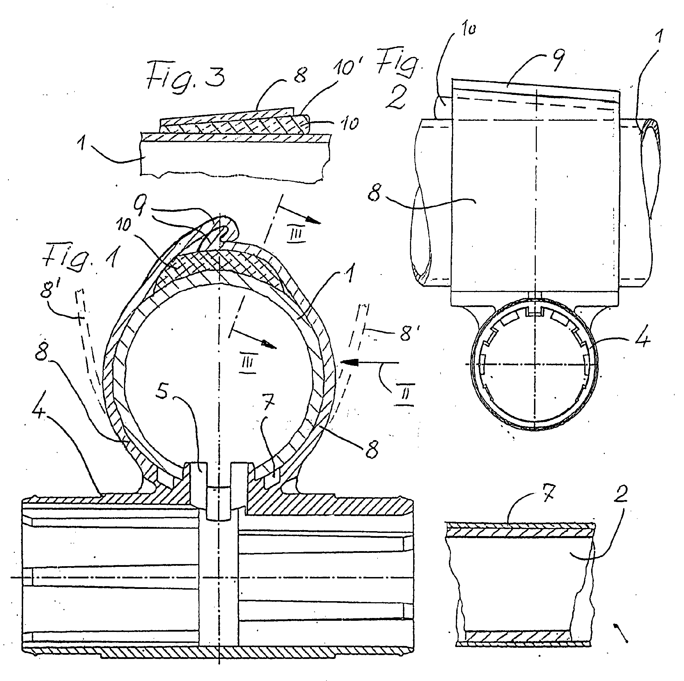

Beide Riegel 8 sind am freien Ende mit Haken 9 versehen, um sie in der Wirkstellung formschlüssig miteinander verbinden bzw. verhaken zu können. Diese Verhakung befindet sich - wie Fig. 1 zeigt - an der der Halterung 4 gegenüberliegenden Stelle des Rohres 1. Dort befindet sich auch eine Einlage 10, und zwar zwischen den Riegelenden einerseits und dem Rohr 1 andererseits. Im Querschnitt gesehen ist diese Einlage dem Rohr entsprechend bogenförmig, gemäss Fig. 3 aber - im Längsschnitt gesehen - keilförmig gestaltet. Der Keilform entsprechend sind auch die Riegelenden ( vgl. Fig. 2 und 3) gestaltet, sie liegen an der schrägen Aussenfläche 10' der Einlage 10 an.

Es sei erwähnt, dass aus Herstellungs- und Montagegründen die noch nicht verhakten ( Ruhestellung ) Riegel 8 beide v-förmig schräg nach oben abstehen im Sinne der gestrichelten Teildarstellung bei 8'.

Zur Montage der Halterung 4 am Rohr 1 werden die Riegelenden zunächst unter Umschlingung des Rohres 1 verhakt. Alsdann wird die Einlage 10 eingetrieben, wobei die Riegel 8 gestrafft werden und schliesslich unter Zugspannung geraten, um so die Befestigung abzusichern und evtl. Masstoleranzen auszugleichen. Zum Lösen der Befestigung wird das dünnere Ende der Einlage 10 ggfs. mit einem Werkzeug beaufschlagt, damit die Einlage 10 freikommt.

Es versteht sich, dass der Keilwinkel so gewählt wird, dass eine Selbsthemmung eintritt, ein ungewolltes Lösen der Einlage also nicht gschehen kann.

Es sei erwähnt, dass ggfs. auch unterschiedlich lange Riegel 8 verwendet werden können, wobei jedoch auch in diesem Falle eine Schrägstellung -wie bei 8' dargestelltunter einem Winkel von etwa 30- - 60° zur Senkrechten angewendet werden kann, um eine Entformung beim Herstellungsvorgang zu erleichtern. Ggfs. kann ein Riegel 8 auch stummelartig ausgeführt sein.

Die erfindungsgemässe lösbare Verbindung kann - wie erwähnt - auch bei plattenförmigen Belüftern bzw. Tellerbelüftern verwendet werden. Zweckmässigerweise wird hier jedoch die Befestigungseinrichtung mit den beiden Riegeln 8 und der Einlage 10 unterhalb der Platte bzw. unterhalb des Tellers angeordnet.

## Patentansprüche

1. Vorrichtung zur lösbaren Befestigung von Belüftungseinrichtungen an Luftzuführungsleitungen bei Anlagen zum feinblasigen Belüften von Wasser, wobei die Befestigungselemente die Luftzuführungsleitung umschliessen, **dadurch gekennzeichnet, dass** die Befestigungselemente von zwei einendig an der Belüftungseinrichtung bzw. deren Halterung (4) verankerten, am freien Ende miteinander verhakten, biegsamen Riegeln (8) gebildet sind, die durch eine oder mehrere, nach Verhaken der Riegel angebrachte, vorzugsweise konische Einlagen (10) zwischen Riegel und Luftzuführungsleitung (1) unter Spannung (Zugspannung) gehalten sind.

2. Vorrichtung nach Anspruch 1, **dadurch gekennzeichnet, dass** lediglich eine Einlage (10) im wesentlichen im Bereich der Verbindungsstelle der beiden Riegel (8) vorgesehen ist.

3. Vorrichtung nach Anspruch 2, dadurch gekennzeichnt, dass sich die Einlage (10) an der der Halterung (4) gegenüberliegenden Stelle der Luftzuführungsleitung (1) befindet.

4. Vorrichtung nach Anspruch 1, **dadurch gekennzeichnet, dass** die Einlage (10) zumindest an ihrer Innenseite der Aussenkontur des Luftzuführungsleitung (1) entsprechend gekrümmt ist.

5. Vorrichtung nach Anspruch 1, **dadurch gekennzeichnet, dass** ein bzw. beide Riegel (8) im Bereich der Einlage (10) zumindest an ihrer Innenseite dem Schrägverlauf (10') der Einlage (10) entsprechend geformt sind.

6. Vorrichtung nach Anspruch 1, **dadurch gekennzeichnet, dass** bei noch in ihrer Ruhestellung befindlichen Riegeln (8') diese v-förmig, schräg nach aussen verlaufend gestaltet sind.

7. Vorrichtung nach Anspruch 1, **dadurch gekennzeichnet, dass** bei einer konischen Einlage (10) Selbsthemmung gegeben ist.

8. Vorrichtung nach Abspruch 1, **dadurch gekennzeichnet, dass** die Riegel (8) unterschiedlich lang sind, wobei ein Riegel ggfs. stummelartig ausgebildet sein kann..

9. Vorrichtung nach Anspruch 6, **dadurch gekennzeichnet, dass** die Riegel (8) mit der Senkrechten Winkel von etwa 30 - 60° bilden.
